# EUROPEAN PATENT APPLICATION

(11) **EP 4 715 194 A1**
(43) Date of publication of application: **25.03.2026**
(21) Application number: 24885820.1
(22) Date of filing: 31.10.2024
(51) Int. Cl.: F02M 26/28

(54) **STRADDLED VEHICLE**

(30) Priority: 31.10.2023 WO PCT/JP2023/039342; 31.10.2023 WO PCT/JP2023/039345
(71) Applicant: Yamaha Hatsudoki Kabushiki Kaisha, Iwata-shi, Shizuoka 438-8501 (JP)
(72) Inventor: MAKITA, Naoki, Iwata-shi, Shizuoka 438-8501 (JP); TAKAHASHI, Toshihiko, Iwata-shi, Shizuoka 438-8501 (JP); TORIGOSHI, Masaki, Iwata-shi, Shizuoka 438-8501 (JP); TAJIMA, Naoto, Iwata-shi, Shizuoka 438-8501 (JP); OKUBO, Akihiko, Iwata-shi, Shizuoka 438-8501 (JP); KAWABE, Keiji, Iwata-shi, Shizuoka 438-8501 (JP)
(74) Representative: Zimmermann, Tankred Klaus
(86) International application number: PCT/JP2024/038874
(87) International publication number: WO 2025/095053

(57) **Abstract**

An EGR cooler 51 of a straddled vehicle 1 is disposed to satisfy conditions (i) to (iii). (i) At least part of the EGR cooler 51 is provided to the left of part of a left surface 10b of an engine 10 or to the right of part of a right surface 10a of the engine 10 on a first cross section CS. (ii) On the first cross section CS, at least part of the EGR cooler 51 is directly above a protrusion 63 or a protrusion 64 of the engine 10, which covers at least part of a generator 61 or a clutch 62. (iii) On the first cross section CS, between a right surface 51b or a left surface 5 la of the EGR cooler 51 and part of the left surface 10b or the right surface 10a of the engine 10, a gap 71 or a gap 73 allowing an airflow to pass through is provided, and/or, between a bottom surface 51d of the EGR cooler 51 and the protrusion 63 or the protrusion 64, a gap 72 or a gap 74 is provided to allow an airflow to pass through. The first cross section CS is parallel to the central axial line Cy of a cylinder hole 15, parallel to or oblique to a vehicle up-down direction, and parallel to a vehicle left-right direction.

## Description

### [Technical Field]

The present teaching relates to a straddled vehicle including an EGR cooler.

### [Background Art]

Traditionally, on an EGR (Exhaust Gas Recirculation) path by which part of exhaust gas generated in an engine is recirculated from an exhaust path to an intake path, an EGR cooler may be provided to cool the exhaust gas. For example, Patent Literature 1 recites a motorcycle in which an EGR cooler is integrally formed in a gearbox housing. In the EGR cooler of Patent Literature 1, an exhaust-side port into which exhaust gas flows is positioned below an intake-side port through which the exhaust gas flows out. Due to this, when the exhaust gas is cooled by the EGR cooler, condensed water generated in the EGR cooler is considered to be discharged from the exhaust-side port and flow toward the exhaust path.

### [Citation List]

### [Patent Literatures]

[Patent Literature 1] German Unexamined Patent Publication No. 102018120800

### [Summary]

### [Technical Problem]

Straddled vehicles such as motorcycles are small and have less vacant space compared to automobiles. Straddled vehicles are different from automobiles in that an airflow generated by the running of the straddled vehicle directly impinges on at least part of the outer surface of the engine and a member around the engine. For straddled vehicles having such features, it has been demanded to provide an EGR cooler such that condensed water generated in the EGR cooler flows toward an exhaust path, by an arrangement different from Patent Literature 1.

An object of the present teaching is to provide a straddled vehicle in which an EGR cooler is provided such that condensed water generated in the EGR cooler flows toward an exhaust path while the upsizing of the straddled vehicle is suppressed, in consideration of unique features of the straddled vehicle, which are a limited amount of vacant space due to the small size of the vehicle and a large amount of airflow impinging on an engine and members around the engine when the vehicle runs, and by an arrangement different from Patent Literature 1.

### [Solution to Problem]

### (1) A straddled vehicle of an embodiment of the present teaching is arranged as described below.

The straddled vehicle includes: an engine which includes a generator and/or a clutch and on which a protrusion that covers at least a part of the generator or the clutch and protrudes in a vehicle leftward direction or a vehicle rightward direction is formed; and
an EGR cooler which is provided on an intermediate part of an EGR path in which part of exhaust gas generated in the engine recirculates from an exhaust path to an intake path, which has an exhaust-side port through which the exhaust gas flows in and an intake-side port through which the exhaust gas flows out, which is arranged such that the lower end of the exhaust-side port is positioned below the intake-side port in a vehicle up-down direction, which is configured to cool the exhaust gas, and which is provided to allow condensed water generated due to cooling of the exhaust gas to be discharged from the exhaust-side port and flow toward the exhaust path,
the EGR cooler is independent from the engine and the longest one of lengths in three directions orthogonal to one another of the EGR cooler being the length in a vehicle front-rear direction or the length in a direction along the vehicle up-down direction,
a left surface and a right surface of the EGR cooler and/or a top surface and a bottom surface of the EGR cooler is made of a metal in order to allow heat of the exhaust gas inside the EGR cooler to partially transferred to the left surface and the right surface of the EGR cooler and/or the top surface and the bottom surface of the EGR cooler, and
on a first cross section that is parallel to a central axial line of at least one cylinder hole of the engine, is either parallel to or oblique to the vehicle up-down direction, and is parallel to a vehicle left-right direction, in order to allow an airflow generated by running of the straddled vehicle to impinge on the left surface and the right surface of the EGR cooler made of the metal and/or the top surface and the bottom surface of the EGR cooler made of the metal,
   (i) at least part of the EGR cooler is provided to the left of part of a left surface of the engine or to the right of part of a right surface of the engine in the vehicle left-right direction,
   (ii) at least part of the EGR cooler is provided directly above the protrusion covering at least part of the generator or the clutch of the engine in a direction that is parallel to the central axial line of the at least one cylinder hole and is identical with a vehicle upward direction, and
   (iii) between the right surface or the left surface of the EGR cooler made of the metal and part of the left surface or the right surface of the engine and/or between the bottom surface of the EGR cooler made of the metal and the protrusion covering at least part of the generator or the clutch of the engine, a gap is provided to allow the airflow to pass through.

According to this configuration, the longest one of the lengths in the three directions orthogonal to one another of the EGR cooler is the length in the vehicle front-rear direction or the length in a direction along the vehicle up-down direction. On this account, the left surface and the right surface of the EGR cooler are large in area. When the longest length is the length in a direction along the vehicle front-rear direction, the top surface and the bottom surface of the EGR cooler are large in area, too.

In order to allow an airflow generated by the running of the straddled vehicle to impinge on the left surface and the right surface and/or the top surface and the bottom surface of the EGR cooler, which are made of metal to allow heat of exhaust gas inside the EGR cooler to be transmitted, on the first cross section that is parallel to the central axial line of the at least one cylinder hole of the engine and parallel to the vehicle left-right direction, (i) at least part of the EGR cooler is provided to the right of or to the left of part of the left surface or the right surface of the engine, (ii) at least part of the EGR cooler is provided directly above the protrusion covering at least part of the generator or the clutch of the engine in the direction that is parallel to the central axial line of the at least one cylinder hole and is identical with the vehicle upward direction, and (iii) between the right surface or the left surface of the EGR cooler made of the metal and part of the left surface or the right surface of the engine and/or between the bottom surface of the EGR cooler made of the metal and the protrusion covering at least part of the generator or the clutch of the engine, a gap is provided to allow the airflow to pass through. Due to this, when the straddled vehicle is running, the airflow including the airflow having passed through the gap between the right surface or the left surface of the EGR cooler and part of the left surface or the right surface of the engine and/or between the bottom surface of the EGR cooler and the protrusion covering at least part of the generator or the clutch of the engine makes contact with the left surface and the right surface of the EGR cooler which are made of metal and large in size and/or the top surface and the bottom surface of the EGR cooler which are made of metal. Due to this, part of the heat of the exhaust gas in the EGR cooler is efficiently dissipated.

By ensuring the cooling performance of the EGR cooler while suppressing its increase in size, the degree of freedom in designing the position of the EGR cooler can be improved.

It is therefore easy to provide the EGR cooler such that condensed water generated in the EGR cooler flows toward the exhaust path while the upsizing of the straddled vehicle is suppressed, by providing the EGR cooler in consideration of the unique feature of the straddled vehicle, which is a large amount of airflow impinging on the engine and members around the engine when the vehicle runs, and by effectively utilizing the space above the protrusion that covers the generator or the clutch of the engine of the straddled vehicle in which the vacant space is small and that protrudes in the vehicle leftward direction or the vehicle rightward direction. It is therefore possible to provide the EGR cooler by the configuration different from Patent Literature 1.

To put it differently, it is possible to provide the EGR cooler such that condensed water generated in the EGR cooler flows toward the exhaust path, in consideration of unique features of the straddled vehicle, which are the limited amount of vacant space due to the small size of the vehicle and the large amount of airflow impinging on the engine and members around the engine when the vehicle runs, and by the arrangement different from Patent Literature 1.

(2) In addition to the arrangement (1) above, the straddled vehicle of the embodiment of the present teaching may further include:
two front fork units which are provided at a left portion and a right portion of the straddled vehicle, respectively, to extend along the vehicle up-down direction, and support at least one front wheel to be rotatable, and
the EGR cooler is provided such that, when the straddled vehicle is running, at least one of an airflow having passed through inside the two front fork units or an airflow having passed through outside the two front fork units impinges on the left surface and the right surface of the EGR cooler made of the metal and/or the top surface and the bottom surface of the EGR cooler made of the metal.

According to this configuration, when the straddled vehicle is running, by utilizing at least one of the airflow having passed through the inside of the two front fork units or the airflow having passed through the outside of the two front fork units, it is possible to efficiently dissipate part of the heat of the exhaust gas in the EGR cooler from the left surface and the right surface of the EGR cooler made of metal and/or the top surface and the bottom surface of the EGR cooler made of metal. No vehicle-mounted components are typically provided outside the two front fork units, and hence there is a large space outside the units, which allows an airflow to pass through. Due to this, when the straddled vehicle is running, a large amount of airflow passes through the space outside the two front fork units, and the large amount of airflow is arranged to hit the left surface and the right surface of the EGR cooler made of metal and/or the top surface and the bottom surface of the EGR cooler made of metal. In addition to this, a space is provided inside the two front fork units to allow the front wheel to move in the vehicle up-down direction relative to the vehicle body frame. Due to this, when the straddled vehicle is running, a large amount of airflow passes through the space inside the two front fork units, and the large amount of airflow is arranged to hit the left surface and the right surface of the EGR cooler made of metal and/or the top surface and the bottom surface of the EGR cooler made of metal.

By ensuring the cooling performance of the EGR cooler while further suppressing its increase in size, the degree of freedom in designing the position of the EGR cooler can be further improved.

Furthermore, it is therefore easy to provide the EGR cooler such that condensed water generated in the EGR cooler flows toward the exhaust path, by providing the EGR cooler in consideration of the unique feature of the straddled vehicle, which is a large amount of airflow impinging on the engine and members around the engine when the vehicle runs, and by effectively utilizing the space above at least part of the generator or the clutch of the engine of the straddled vehicle in which the vacant space is small.

(3) In addition to the arrangement (2) above, the straddled vehicle of the embodiment of the present teaching may further include:
a headlight unit which is composed of at least one headlight,
the EGR cooler being arranged such that, when the straddled vehicle is running, in a space which is above the rotation center of the at least one front wheel and below the lower end of the headlight unit in the vehicle up-down direction, at least one of the airflow having passed through the inside the two front fork units or the airflow having passed through the outside the two front fork units impinges on the left surface and the right surface of the EGR cooler made of the metal and/or the top surface and the bottom surface of the EGR cooler made of the metal.

According to this configuration, because the front wheel is supported by the front fork unit at the rotation center, no space is formed between the front wheel and the front fork unit at around the rotation center of the front wheel. On the other hand, above the vicinity of the rotation center, a clearance (space) is provided between the front wheel and the front fork unit to allow the front wheel to rotate. This space functions as a passage in which an airflow flows, and the airflow having passed through the space is arranged to hit the left surface and the right surface of the EGR cooler made of metal and/or the top surface and the bottom surface of the EGR cooler made of metal. Furthermore, the lower end of the headlight unit including at least one headlight is positioned so that the space allowing the front wheel to move in the vehicle up-down direction relative to the vehicle body frame is provided directly below the headlight unit. Due to this, a relatively large space is formed directly below the headlight unit, a large amount of airflow flows through this space, the large amount of airflow passes through this space, and the large amount of airflow is arranged to hit the left surface and the right surface of the EGR cooler made of metal and/or the top surface and the bottom surface of the EGR cooler made of metal.

As such, when the straddled vehicle is running, by utilizing the airflow flowing around the front fork unit in the space above the rotation center of the front wheel and below the lower end of the headlight unit, it is possible to efficiently dissipate part of the heat of the exhaust gas in the EGR cooler from the left surface and the right surface of the EGR cooler made of metal and/or the top surface and the bottom surface of the EGR cooler made of metal. By ensuring the cooling performance of the EGR cooler while further suppressing its increase in size, the degree of freedom in designing the position of the EGR cooler can be further improved.

Furthermore, it is therefore easy to provide the EGR cooler such that condensed water generated in the EGR cooler flows toward the exhaust path, by providing the EGR cooler in consideration of the unique feature of the straddled vehicle, which is a large amount of airflow impinging on the engine and members around the engine when the vehicle runs, and by effectively utilizing the space above at least part of the generator or the clutch of the engine of the straddled vehicle in which the vacant space is small.

(4) In addition to the arrangement (3) above, the straddled vehicle of the embodiment of the present teaching may be arranged as described below.

The EGR cooler is provided above the rotation center of the at least one front wheel and below the lower end of the headlight unit in the vehicle up-down direction so that, when the straddled vehicle is running, in the space which is above the rotation center of the at least one front wheel and below the lower end of the headlight unit in the vehicle up-down direction, at least one of the airflow having passed through the inside the two front fork units or the airflow having passed through the outside the two front fork units impinges on the left surface and the right surface of the EGR cooler made of the metal and/or the top surface and the bottom surface of the EGR cooler made of the metal.

According to this configuration, when the straddled vehicle is running, by further reliably utilizing the airflow flowing around the front fork unit in the space above the rotation center of the front wheel and below the lower end of the headlight unit, it is possible to efficiently dissipate part of the heat of the exhaust gas in the EGR cooler from the left surface and the right surface of the EGR cooler made of metal and/or the top surface and the bottom surface of the EGR cooler made of metal. By ensuring the cooling performance of the EGR cooler while further suppressing its increase in size, the degree of freedom in designing the position of the EGR cooler can be further improved.

Furthermore, it is therefore easy to provide the EGR cooler such that condensed water generated in the EGR cooler flows toward the exhaust path, by providing the EGR cooler in consideration of the unique feature of the straddled vehicle, which is a large amount of airflow impinging on the engine and members around the engine when the vehicle runs, and by effectively utilizing the space above at least part of the generator or the clutch of the engine of the straddled vehicle in which the vacant space is small.

(5) In addition to any one of the arrangements (1) to (4) above, the straddled vehicle of the embodiment of the present teaching may be arranged as described below.

The EGR cooler is supported by the engine.

According to this configuration, in the straddled vehicle, as the EGR cooler is attached to the engine, the design accuracy of the gap between the right surface or the left surface of the EGR cooler and part of the left surface or the right surface of the engine and/or the gap between the bottom surface of the EGR cooler and the protrusion covering at least part of the generator or the clutch of the engine can be improved, as compared to a case where, for example, the EGR cooler is attached to a member different from the engine, such as the vehicle body frame. Due to this, it is possible to further ensure the formation of the gap allowing an airflow generated by the running of the straddled vehicle to pass through, between the right surface or the left surface of the EGR cooler and part of the left surface or the right surface of the engine and/or between the bottom surface of the EGR cooler and the protrusion covering at least part of the generator or the clutch of the engine. It is therefore possible to efficiently dissipate part of the heat of the exhaust gas in the EGR cooler from the left surface and the right surface of the EGR cooler made of metal and/or the top surface and the bottom surface of the EGR cooler made of metal, by further utilizing the airflow generated by the running of the straddled vehicle. By ensuring the cooling performance of the EGR cooler while further suppressing its increase in size, the degree of freedom in designing the position of the EGR cooler can be further improved.

Furthermore, it is therefore easy to provide the EGR cooler such that condensed water generated in the EGR cooler flows toward the exhaust path, by providing the EGR cooler in consideration of the unique feature of the straddled vehicle, which is a large amount of airflow impinging on the engine and members around the engine when the vehicle runs, and by effectively utilizing the space above at least part of the generator or the clutch of the engine of the straddled vehicle in which the vacant space is small.

(6) In addition to any one of the arrangements (1) to (5) above, the straddled vehicle of the embodiment of the present teaching may be arranged as described below.

The top surface of the EGR cooler is made of the metal, and
on the first cross section, in order to allow an airflow generated by the running of the straddled vehicle to impinge on the top surface of the EGR cooler made of the metal,
(I) in a direction that is parallel to the central axial line of the at least one cylinder hole and is identical with the vehicle downward direction, at least part of the EGR cooler is provided directly below at least one of: a frame portion; a cover portion; a tank member formed of only a tank or a combination of the tank and a tank shroud; or a dummy tank member formed of only a dummy tank or a combination of the dummy tank and a dummy tank shroud, and
(II) between the top surface of the EGR cooler made of the metal and at least one of the frame portion, the cover portion, the tank member, or the dummy tank member, a gap is provided to allow the airflow to pass through.

According to this configuration, a gap allowing an airflow generated by the running of the straddled vehicle to pass through can be easily provided between the top surface of the EGR cooler and the frame portion, the cover portion, the tank member, or the dummy tank member. It is therefore possible to efficiently dissipate part of the heat of the exhaust gas in the EGR cooler at least from the top surface of the EGR cooler made of metal, by further utilizing the airflow generated by the running of the straddled vehicle. By ensuring the cooling performance of the EGR cooler while further suppressing its increase in size, the degree of freedom in designing the position of the EGR cooler can be further improved.
Furthermore, it is therefore easy to provide the EGR cooler such that condensed water generated in the EGR cooler flows toward the exhaust path, by providing the EGR cooler in consideration of the unique feature of the straddled vehicle, which is a large amount of airflow impinging on the engine and members around the engine when the vehicle runs, and by effectively utilizing the space above at least part of the generator or the clutch of the engine of the straddled vehicle in which the vacant space is small.

(7) In addition to any one of the arrangements (1) to (6) above, the straddled vehicle of the embodiment of the present teaching may be arranged as described below.

The left surface and the right surface of the EGR cooler are made of the metal,
at least part of the left surface or the right surface of the EGR cooler is covered with a cover portion, and
on the first cross section, in order to allow an airflow generated by the running of the straddled vehicle to impinge on the left surface or the right surface of the EGR cooler made of the metal, between the left surface or the right surface of the EGR cooler made of the metal and the cover portion, a gap is provided to allow the airflow to pass through.

According to this configuration, a gap allowing an airflow generated by the running of the straddled vehicle to pass through can be easily provided between left surface or the right surface of the EGR cooler and the cover portion. It is therefore possible to efficiently dissipate part of the heat of the exhaust gas in the EGR cooler at least from the left surface or the right surface of the EGR cooler made of metal, by further utilizing the airflow generated by the running of the straddled vehicle. By ensuring the cooling performance of the EGR cooler while further suppressing its increase in size, the degree of freedom in designing the position of the EGR cooler can be further improved.

Furthermore, it is therefore easy to provide the EGR cooler such that condensed water generated in the EGR cooler flows toward the exhaust path, by providing the EGR cooler in consideration of the unique feature of the straddled vehicle, which is a large amount of airflow impinging on the engine and members around the engine when the vehicle runs, and by effectively utilizing the space above at least part of the generator or the clutch of the engine of the straddled vehicle in which the vacant space is small.

(8) In addition to any one of the arrangements (1) to (6) above, the straddled vehicle of the embodiment of the present teaching may be arranged as described below.

On the first cross section, in order to allow an airflow generated by the running of the straddled vehicle to impinge on the left surface and the right surface of the EGR cooler made of the metal and/or the top surface and the bottom surface of the EGR cooler made of metal,
(A) the EGR cooler is positioned either below the left cover portion at the left portion of the straddled vehicle in a direction parallel to the central axial line of the at least one cylinder hole and identical with the vehicle downward direction and rightward of the left cover portion in the vehicle left-right direction, or below a right cover portion at the right portion of the straddled vehicle in the direction parallel to the central axial line of the at least one cylinder hole and identical with the vehicle downward direction and leftward of the right cover portion in the vehicle left-right direction, and
(B) between an upper left end portion or an upper right end portion of the EGR cooler and the left cover portion or the right cover portion, a gap is provided to allow the airflow to pass through.

According to this configuration, a gap allowing an airflow generated by the running of the straddled vehicle to pass through can be easily provided between the upper left end portion or the upper right end portion of the EGR cooler and the left cover portion or the right cover portion. Furthermore, one of the left surface and the right surface of the EGR cooler, which is opposite to the engine, can be easily exposed to the outside. With this, it is possible to allow a larger amount of the airflow generated by the running of the straddled vehicle to make contact with this surface exposed to the outside. It is therefore possible to efficiently dissipate part of the heat of the exhaust gas in the EGR cooler from the left surface and the right surface of the EGR cooler made of metal and/or the top surface and the bottom surface of the EGR cooler made of metal, by further utilizing the airflow generated by the running of the straddled vehicle. By ensuring the cooling performance of the EGR cooler while further suppressing its increase in size, the degree of freedom in designing the position of the EGR cooler can be further improved.

Furthermore, it is therefore easy to provide the EGR cooler such that condensed water generated in the EGR cooler flows toward the exhaust path, by providing the EGR cooler in consideration of the unique feature of the straddled vehicle, which is a large amount of airflow impinging on the engine and members around the engine when the vehicle runs, and by effectively utilizing the space above at least part of the generator or the clutch of the engine of the straddled vehicle in which the vacant space is small.

(9) In addition to any one of the arrangements (1) to (8) above, the straddled vehicle of the embodiment of the present teaching may be arranged as described below.

The left surface and the right surface of the EGR cooler are made of the metal,
on the first cross section, in order to allow an airflow generated by the running of the straddled vehicle to impinge on the left surface or the right surface of the EGR cooler made of the metal,
(a) at least part of the EGR cooler is provided either to the right of a left frame portion at the left portion of the straddled vehicle or to the left of a right frame portion at the right portion of the straddled vehicle in the vehicle left-right direction, and
(b) a gap allowing the airflow to pass through is provided either between the left surface of the EGR cooler made of the metal and the left frame portion or between the right surface of the EGR cooler made of the metal and the right frame portion.

According to this configuration, a gap allowing an airflow generated by the running of the straddled vehicle to pass through can be easily provided between the left surface of the EGR cooler and the left frame portion or between the right surface of the EGR cooler and the right frame portion. Furthermore, a space allowing an airflow generated by the running of the straddled vehicle to pass through can be easily provided directly above the EGR cooler. It is therefore possible to efficiently dissipate part of the heat of the exhaust gas in the EGR cooler from the left surface and the right surface of the EGR cooler made of metal and/or the top surface and the bottom surface of the EGR cooler made of metal, by further utilizing the airflow generated by the running of the straddled vehicle. By ensuring the cooling performance of the EGR cooler while further suppressing its increase in size, the degree of freedom in designing the position of the EGR cooler can be further improved.

Furthermore, it is therefore easy to provide the EGR cooler such that condensed water generated in the EGR cooler flows toward the exhaust path, by providing the EGR cooler in consideration of the unique feature of the straddled vehicle, which is a large amount of airflow impinging on the engine and members around the engine when the vehicle runs, and by effectively utilizing the space above at least part of the generator or the clutch of the engine of the straddled vehicle in which the vacant space is small.

(10) In addition to any one of the arrangements (1) to (8) above, the straddled vehicle of the embodiment of the present teaching may be arranged as described below.

On the first cross section, in order to allow an airflow generated by the running of the straddled vehicle to impinge on the left surface and the right surface of the EGR cooler made of the metal and/or the top surface and the bottom surface of the EGR cooler made of metal,
(a) the EGR cooler is provided directly below a space between two frame portions at the left portion and the right portion of the straddled vehicle, respectively, in a direction parallel to the central axial line of the at least one cylinder hole and identical with the vehicle downward direction, and
(b) a gap allowing the airflow to pass through is provided between an upper left end portion or an upper right end portion of the EGR cooler and one of the two frame portions.

According to this configuration, a gap allowing an airflow generated by the running of the straddled vehicle to pass through can be easily provided between the upper left end portion or the upper right end portion of the EGR cooler and one of the two frame portions. Furthermore, a space allowing an airflow generated by the running of the straddled vehicle to pass through can be easily provided directly above the EGR cooler. It is therefore possible to efficiently dissipate part of the heat of the exhaust gas in the EGR cooler from the left surface and the right surface of the EGR cooler made of metal and/or the top surface and the bottom surface of the EGR cooler made of metal, by further utilizing the airflow generated by the running of the straddled vehicle. By ensuring the cooling performance of the EGR cooler while further suppressing its increase in size, the degree of freedom in designing the position of the EGR cooler can be further improved.

Furthermore, it is therefore easy to provide the EGR cooler such that condensed water generated in the EGR cooler flows toward the exhaust path, by providing the EGR cooler in consideration of the unique feature of the straddled vehicle, which is a large amount of airflow impinging on the engine and members around the engine when the vehicle runs, and by effectively utilizing the space above at least part of the generator or the clutch of the engine of the straddled vehicle in which the vacant space is small.

In the present teaching and embodiments, a path indicates a space in which an object such as gas flows. This definition is applicable to an EGR path, an intake path, and an exhaust path of the present teaching and embodiments.

In the present teaching and embodiments, a vehicle up-down direction is a direction perpendicular to a horizontal plane when the straddled vehicle stands erect on the horizontal plane. The vehicle up-down direction encompasses a vehicle upward direction and a vehicle downward direction.

In the present teaching and embodiments, a vehicle front-rear direction is a direction parallel to a running direction of the straddled vehicle when the straddled vehicle runs straight. The vehicle front-rear direction encompasses a vehicle forward direction and a vehicle rearward direction.

In the present teaching and embodiments, a vehicle left-right direction is a direction orthogonal to the vehicle up-down direction and the vehicle front-rear direction, and is a left-right direction for the rider riding on the straddled vehicle. The vehicle left-right direction encompasses a vehicle leftward direction and a vehicle rightward direction.

In the present teaching and embodiments, a straddled vehicle refers to a vehicle in which a rider rides in a state of straddling a saddle. The straddled Vehicle includes a motorcycle, a motor tricycle, a four-wheeled buggy (ATV: All Terrain Vehicle), a snowmobile, a personal watercraft, and the like. The motorcycle as the straddled vehicle includes a scooter, an engine-equipped bicycle, a moped, etc. The motor tricycle includes one front wheel or two front wheels.

The straddled vehicle of the present teaching and embodiments may include at least one front wheel. The straddled vehicle of the present teaching and embodiments may be a straddled vehicle in which a vehicle body frame leans in a vehicle rightward direction relative to a vehicle up-down direction when turning right and leans in a vehicle leftward direction relative to the vehicle up-down direction when turning left.

In the present teaching and embodiments, a driving source of the straddled vehicle may only be an engine, or may be both an engine and an electric motor. The electric motor as the driving source does not include a starter motor which is used exclusively for starting an engine.

In the present teaching and embodiments, a left portion of the straddled vehicle is a portion leftward of the center of the straddled vehicle in the vehicle left-right direction, and a right portion of the straddled vehicle is a portion rightward of the center of the straddled vehicle in the vehicle left-right direction.

In the present teaching and embodiments, the straddled vehicle includes an engine. In the present teaching and embodiments, the engine may be a four-stroke engine. The engine may be a multi-cylinder engine having plural combustion chambers. The engine may be an inline multi-cylinder engine having combustion chambers aligned in the vehicle left-right direction. The engine may be a V engine that has a V shape when viewed in the vehicle left-right direction. The engine may be a single-cylinder engine having one combustion chamber.

In the present teaching and embodiments, the engine includes a generator and/or a clutch, and a protrusion that covers at least part of the generator or the clutch and protrudes in the vehicle leftward direction or the vehicle rightward direction is formed on the engine.

In the present teaching and embodiments, the expression "a protrusion that covers at least part of the generator or the clutch and protrudes in the vehicle leftward direction or the vehicle rightward direction is formed on the engine" does not exclude a case where "a protrusion that covers at least part of the generator and protrudes in the vehicle leftward direction or the vehicle rightward direction" and "a protrusion that covers at least part of the clutch and protrudes in the vehicle leftward direction or the vehicle rightward direction" are both formed on the engine.

In the present teaching and embodiments, the number of at least one cylinder hole in the engine may be one or plural. A combustion chamber is formed by a cylinder hole, a piston provided in the cylinder hole, and a cylinder head.

In the present teaching and embodiments, a first cross section that is parallel to the central axial line of at least one cylinder hole of the engine, is either parallel to or oblique to the vehicle up-down direction, and is parallel to the vehicle left-right direction may or may not overlap the central axial line of the at least one cylinder hole of the engine. In the present teaching and embodiments, a central axial line of a cylinder hole is not a line segment existing only in a region where the cylinder hole exists but a linear line with infinite length. The central axial line of the cylinder hole, which functions as reference for the first cross section, is parallel to or oblique to the vehicle up-down direction. The central axial line of the cylinder hole functioning as reference for the first cross section may be tilted relative to the vehicle up-down direction such that an upper part of the central axial line is positioned forward of a lower part of the central axial line in the vehicle front-rear direction.

In the present teaching and embodiments, the expression "a first cross section that is parallel to the central axial line of at least one cylinder hole of the engine, is either parallel to or oblique to the vehicle up-down direction, and is parallel to the vehicle left-right direction" does not indicate that, when the engine has plural cylinder holes, all cylinder holes have central axial lines that are parallel to each other, the central axial lines are either parallel to or oblique to the vehicle up-down direction, and the central axial lines are aligned on a straight line parallel to the vehicle left-right direction. For example, the engine may be a V engine having only two cylinder holes whose central axial lines are not parallel to each other. In this case, the first cross section is set based on the central axial line of one of the two cylinder holes. Alternatively, the engine may be, for example, a V engine which includes cylinder holes that have central axial lines parallel to each other and are aligned on a straight line parallel to the vehicle left-right direction and other cylinder holes that have central axial lines not parallel to the central axial lines of the cylinder holes.

In the present teaching and embodiments, an intake path is directly connected to at least one combustion chamber of the engine. In the intake path, air supplied to at least one combustion chamber of the engine flows. The intake path is partially formed inside the engine. The intake path is partially formed outside the engine and constituted by an intake pipe, etc. A rear portion of the engine may constitute part of the intake path. The intake path has at least one downstream end in the flow direction of the air. The number of the at least one downstream end of the intake path may be identical with the number of combustion chambers or larger than the number of combustion chambers.

In the present teaching and embodiments, the exhaust path is directly connected to at least one combustion chamber of the engine. In the exhaust path, exhaust gas exhausted from the at least one combustion chamber of the engine flows. The exhaust path is partially formed inside the engine. The exhaust path is partially formed outside the engine and constituted by an exhaust pipe, etc. A front portion of the engine may constitute part of the exhaust path. The exhaust path has at least one upstream end in the flow direction of the exhaust gas. The number of the at least one upstream end of the exhaust path may be identical with the number of combustion chambers or larger than the number of combustion chambers.

In the present teaching and embodiments, an EGR path is directly connected to the exhaust path and the intake path. The EGR path may be connected to the exhaust path and the intake path at the outside of the engine. The EGR path may be connected to the exhaust path and the intake path at the inside of the engine. The EGR path may be connected to the exhaust path at the inside of the engine and connected to the intake path at the outside of the engine. The EGR path may be connected to the exhaust path at the outside of the engine and connected to the intake path at the inside of the engine.

In the present teaching and embodiments, the number of junctions between the EGR path and the exhaust path may be one or plural. When the engine has plural combustion chambers, the EGR path may be connected to the exhaust path such that part of the exhaust gas exhausted from the plural combustion chambers flows into the EGR path. When the engine has plural combustion chambers, the EGR path may be connected to the exhaust path such that only part of the exhaust gas exhausted from at least one of the plural combustion chambers flows into the EGR path.

In the present teaching and embodiments, the number of junctions between the EGR path and the intake path may be one or plural.

In the present teaching and embodiments, the EGR path may be provided with an EGR valve configured to adjust the flow rate of the exhaust gas flowing in the EGR path. The EGR valve may be provided between the intake path and the EGR cooler on the EGR path.

In the present teaching and embodiments, an expression "the EGR cooler is provided at an intermediate part of the EGR path" indicates that the EGR cooler is not provided at a junction between the exhaust path or the intake path and the EGR path.

In the present teaching and embodiments, the EGR cooler is configured to cool the exhaust gas flowing into the EGR cooler through the exhaust-side port. The EGR cooler may be configured to cool the exhaust gas by utilizing coolant (e.g., water) for cooling the engine. In this case, the engine may include a coolant passage dedicated for the EGR cooler. The EGR cooler may be configured to cool the exhaust gas by utilizing an airflow generated by the running of the straddled vehicle, irrespective of the cooling method of cooling the engine. In this case, the EGR cooler includes a fin by which the heat exchange efficiency is improved by increasing the contact area with an airflow.

In the present teaching and embodiments, an expression "the EGR cooler is provided to allow condensed water generated due to cooling of exhaust gas to be discharged from the exhaust-side port and flow toward the exhaust path" indicates that the EGR cooler and the EGR path are arranged such that condensed water in the EGR cooler, which is generated due to cooling of exhaust gas by the EGR cooler, flows toward the exhaust-side port of the EGR cooler and is discharged from the exhaust-side port, and the condensed water discharged from the exhaust-side port flows in the EGR path toward the exhaust path. The condensed water generated due to cooling of the exhaust gas by the EGR cooler is discharged from the exhaust-side port and flows toward the exhaust path.

In the present teaching and embodiments, an expression "condensed water generated due to cooling of exhaust gas is discharged from the exhaust-side port and flows toward the exhaust path" encompasses a case where condensed water in the EGR cooler, which is generated due to cooling of exhaust gas by the EGR cooler, is discharged from the exhaust-side port and flows into the exhaust path. The condensed water discharged from the exhaust-side port may evaporate before reaching the exhaust path.

In the present teaching and embodiments, an expression "the EGR cooler is independent from the engine" indicates that the EGR cooler and the engine are independent from each other. In the present teaching and embodiments, the EGR cooler may be provided rightward or leftward of the center of the straddled vehicle in the vehicle left-right direction.

In the present teaching and embodiments, a left surface of the EGR cooler is a surface oriented to the vehicle leftward direction of the EGR cooler, whereas a right surface of the EGR cooler is a surface oriented to the vehicle rightward direction of the EGR cooler. The left surface and the right surface of the EGR cooler are orthogonal to a direction along the vehicle left-right direction. The expression "a direction along the vehicle left-right direction" encompasses not only a direction parallel to the vehicle left-right direction but also a direction inclined within the range of 45 degrees relative to the vehicle left-right direction. The left surface and the right surface of the EGR cooler are more or less orthogonal to the vehicle left-right direction, but may not be strictly orthogonal to the vehicle left-right direction. The left surface of the EGR cooler and the right surface of the EGR cooler may be parallel to each other.

In the present teaching and embodiments, between the left surface or the right surface of the EGR cooler and the engine, a gap that allows an airflow generated by the running of the straddled vehicle to pass therethrough may or may not be provided. When such a gap allowing an airflow to pass through is not provided, the left surface or the right surface of the EGR cooler is in contact with the engine, or a gap which does not allow an airflow to pass therethrough is provided between the left surface or the right surface of the EGR cooler and the engine.

In the present teaching and embodiments, a top surface of the EGR cooler is one of surfaces of the EGR cooler, on which surfaces neither an exhaust-side port nor an intake-side port is provided, and is a surface of the EGR cooler oriented to the vehicle upward direction. A bottom surface of the EGR cooler is one of the surfaces of the EGR cooler where neither an exhaust-side port nor an intake-side port is provided, and which is a surface of the EGR cooler oriented to the vehicle downward direction. The top surface and the bottom surface of the EGR cooler may be orthogonal to a direction along the vehicle up-down direction, or may be orthogonal to a direction along the vehicle front-rear direction. The direction along the vehicle up-down direction is a direction within the range of 45 degrees relative to the vehicle up-down direction, and the direction along the vehicle front-rear direction is a direction within the range of 45 degrees relative to the vehicle front-rear direction. The top surface of the EGR cooler and the bottom surface of the EGR cooler may be parallel to each other.

In the present teaching and embodiments, between the top surface of the EGR cooler and the engine, a gap that allows an airflow generated by the running of the straddled vehicle to pass therethrough may or may not be provided. When such a gap allowing an airflow to pass through is not provided, the top surface of the EGR cooler is in contact with the engine, or a gap which does not allow an airflow to pass therethrough is provided between the top surface of the EGR cooler and the engine.

In the present teaching and embodiments, the EGR cooler may have at least one surface that is perpendicular to the left surface and/or the right surface. An expression "two surfaces perpendicular to each other in the EGR cooler" indicates that two surfaces are perpendicular to each other on the whole, and each surface may have protrusions and depressions. These two surfaces perpendicular to each other may be connected with each other via a corner portion, or may be connected with each other via another surface.

In the present teaching and embodiments, the cross-sectional shape of the EGR cooler orthogonal to the flow direction of exhaust gas in the EGR cooler may be polygonal, e.g., rectangular, hexagonal or octagonal. In the present teaching and embodiments, the flow direction of exhaust gas in the EGR cooler may be a direction along a direction orthogonal to the vehicle left-right direction. The expression "a direction along a direction orthogonal to the vehicle left-right direction" encompasses not only a direction parallel to a direction orthogonal to the vehicle left-right direction but also a direction inclined within the range of 45 degrees relative to the vehicle left-right direction.

In the present teaching and embodiments, the lengths of the EGR cooler in three directions orthogonal to one another may be, for example, the length in a first direction orthogonal to a first surface that is either the left surface or the right surface of the EGR cooler, the length in a second direction orthogonal to a second surface perpendicular to the first surface of the EGR cooler, and the length in a third direction orthogonal to both the first direction and the second direction. The third direction is, for example, identical with or similar to the direction of a linear line connecting the exhaust-side port and the intake-side port of the EGR cooler. The longest one of the lengths in the three directions orthogonal to one another of the EGR cooler may be the length in the third direction, the length in the first direction, or the length in the second direction. The lengths in the three directions orthogonal to one another of the EGR cooler are the length in a direction along the vehicle front-rear direction, the length in a direction along the vehicle up-down direction, and the length in a direction along the vehicle left-right direction.

In the present teaching and embodiments, a phrase "the longest one of the lengths in the three directions orthogonal to one another of the EGR cooler is a direction along the vehicle front-rear direction or a direction along the vehicle up-down direction" indicates that the longest one of the lengths in the three directions orthogonal to one another of the EGR cooler is the length in a direction within the range of 45 degrees relative to the vehicle front-rear direction or a direction within the range of 45 degrees relative to the vehicle up-down direction. It is noted that the word "or" in the sentence above does not exclude "and". To put it differently, the longest one of the lengths in the three directions orthogonal to one another of the EGR cooler may be the length in a direction within the range of 45 degrees relative to the vehicle front-rear direction and within the range of 45 degrees relative to the vehicle up-down direction.

In the present teaching and embodiments, an expression "heat of exhaust gas in the EGR cooler is partially transferred to the left surface and the right surface of the EGR cooler and/or the top surface and the bottom surface of the EGR cooler" encompasses a case where heat of exhaust gas in the EGR cooler is partially transferred to these surfaces of the EGR cooler only through structures constituting the EGR cooler and a case where heat of exhaust gas in the EGR cooler is partially transferred to these surfaces of the EGR cooler through coolant and structures constituting the EGR cooler.

In the present teaching and embodiments, an expression "on a first cross section, at least part of the EGR cooler is to the left of part of the left surface of the engine or to the right of part of the right surface of the engine" only refers to the relationship between the EGR cooler on the first cross section and the left surface or the right surface of the engine on the first cross section. In the present teaching and embodiments, an expression "on the first cross section, at least part of the EGR cooler which is provided to the left of part of the left surface of the engine or to the right of part of the right surface of the engine" may indicate the entirety of the EGR cooler on the first cross section or part of the EGR cooler on the first cross section.

In the present teaching and embodiments, an expression "at least part of the EGR cooler which is directly above a protrusion covering at least part of the generator or clutch of the engine in a direction that is parallel to the central axial line of at least one cylinder hole and is identical with the vehicle upward direction on the first cross section" may indicate the entirety of the EGR cooler on the first cross section or part of the EGR cooler on the first cross section.

In the present teaching and embodiments, a direction that is parallel to the central axial line of at least one cylinder hole and is identical with the vehicle upward direction on the first cross section is a direction that is on the first cross section and is identical with the vehicle upward direction.

In the present teaching and embodiments, an expression "on the first cross section, at least part of the EGR cooler is directly above a protrusion in a direction that is parallel to the central axial line of at least one cylinder hole and is identical with the vehicle upward direction" indicates the following state. When viewed in a direction parallel to the central axial line of a cylinder hole, at least part of the EGR cooler on the first cross section overlaps at least part of the protrusion on the first cross section, and the lower end of at least part of the EGR cooler on the first cross section and the upper end of the at least part of the protrusion on the first cross section oppose each other in the direction parallel to the central axial line of the cylinder hole. This definition is applicable to a case where "protrusion" is replaced with another term and "upward direction", "directly above", "upper end", and "lower end" are replaced with "downward direction", "directly below", "lower end", and "upper end", respectively.

In the present teaching and embodiments, the protrusion that covers at least part of the generator or the clutch of the engine on the first cross section indicates a part protruding in the vehicle leftward direction or the vehicle rightward direction from the engine on the first cross section. The central axial line of the generator may be parallel to the vehicle left-right direction. The central axial line of the generator may intersect with the central axial line of the cylinder hole, or may be spatially apart from the central axial line of the cylinder hole. Furthermore, the generator may be provided on the central axial line of the crankshaft. The central axis of the clutch may be spatially apart from the central axial line of the cylinder hole. For example, the clutch may be provided on an axial line parallel to the central axial line of the crankshaft.

In the present teaching and embodiments, on the first cross section, at least part of the EGR cooler which is provided to the left of part of the left surface of the engine or to the right of part of the right surface of the engine may be entirely or partially identical with at least part of the EGR cooler which is directly above the protrusion covering at least part of the generator or the clutch of the engine in a direction that is parallel to the central axial line of at least one cylinder hole and is identical with the vehicle upward direction.

In the present teaching and embodiments, the front fork unit is formed of one or more front fork. Each front fork is a rod-shaped member extending along the vehicle up-down direction, and a single front fork is not forked on its own. The front fork unit is not forked, either. When the straddled vehicle has one front wheel, the front fork unit may be formed of a single front fork. When the straddled vehicle has two front wheels, the front fork unit may be formed of plural front forks. To be more specific, a pair of right front forks supporting a right front wheel may form a single front fork unit, and a pair of left front forks supporting a left front wheel may form another single front fork unit.

In the present teaching and embodiments, the straddled vehicle may include a headlight unit composed of at least one headlight. The headlight unit may be constituted by a single headlight provided at the center in the vehicle left-right direction of the straddled vehicle, or may be constituted by two headlights provided at the left portion and the right portion of the straddled vehicle, respectively. The position of the center in the vehicle left-right direction of the headlight unit may be identical with the center in the vehicle left-right direction of the straddled vehicle. The headlight unit may be a part of the straddled vehicle, which is visible from the front. The headlight may be provided in a hole formed in the front cover. In this case, when the straddled vehicle is viewed from the front, a space that allows the front wheel to move in the vehicle up-down direction relative to the vehicle body frame is secured below the lower end of the front cover provided directly below the headlight unit. In this description, the space below the lower end of the front cover provided directly below the headlight unit may be referred to as a space directly below the headlight unit.

In the present teaching and embodiments, an expression "the EGR cooler is supported by the engine" encompasses a case where the EGR cooler is indirectly connected to the engine via another member such as a bracket and a case where the EGR cooler is directly connected to the engine by a fastening member.

In the present teaching and embodiments, a frame portion is a part of a vehicle body frame. A frame portion appearing on the first cross section may be a frame portion that is provided at a left portion or a right portion of the straddled vehicle and extends along the vehicle front-rear direction. Two frame portions provided at the left portion and the right portion of the straddled vehicle, respectively, are a left frame portion provided at the left portion of the straddled vehicle and a right frame portion provided at the right portion of the straddled vehicle.

In the present teaching and embodiments, the cover portion forms part of the appearance of the straddled vehicle. The cover portion may be an independent member, may be part of an independent member, or may be constituted by plural independent members. The cover portion may be a tank shroud which appears to be integrated with the tank. The cover portion may be at least part of a cover that is either a front cowling or a side cowling. When the cover portion is provided to cover at least part of the left surface or the right surface of the EGR cooler, the cover portion may be a protector provided to protect at least the EGR cooler.

In the present teaching and embodiments, an expression "on the first cross section, the EGR cooler is positioned below a left cover portion at the left portion of the straddled vehicle in a direction that is parallel to the central axial line of at least one cylinder hole and is identical with the vehicle downward direction" indicates that, on the first cross section, the entirety of the EGR cooler is below a flat plane that passes through the lowermost end of the left cover portion on the first cross section and is orthogonal to the central axial line of the cylinder hole. The lowermost end of the EGR cooler on the first cross section may or may not exist on a flat plane that passes through the lowermost end of the left cover portion on the first cross section and is orthogonal to the central axial line of the cylinder hole. The EGR cooler and the left cover portion may or may not be lined up on a straight line parallel to the central axial line of the cylinder hole.

With appropriate replacement of the terms, the definition above is applicable to an expression "on the first cross section, the EGR cooler is positioned below a right cover portion at the right portion of the straddled vehicle in a direction that is parallel to the central axial line of at least one cylinder hole and is identical with the vehicle downward direction".

In the present teaching and embodiments, a tank member may be constituted only by a tank, or may be a combination of a tank and a tank shroud. The tank is, for example, a fuel tank that stores fuel supplied to the engine unit. The tank shroud is a cover portion which appears to be integrated with the tank.

In the present teaching and embodiments, a dummy tank member may be constituted only by a dummy tank, or may be a combination of a dummy tank and a dummy tank shroud. The dummy tank is, for example, a member which appears to be a tank but does not store fuel. The dummy tank may have a storage space therein. The dummy tank may be a cover that does not have a storage space. The dummy tank shroud is a cover portion which appears to be integrated with the dummy tank.

In the present teaching and embodiments, the engine may be air-cooled or liquid-cooled by using coolant that is not lubricating oil. The air-cooled or liquid-cooled engine may be combined with cooling by using lubricating oil.

In the present teaching and embodiments, the engine may be provided with a fuel supplier configured to supply fuel to a combustion chamber of the engine. The fuel supplier may be provided to directly supply fuel to a combustion chamber of the engine. The fuel supplier may be provided to supply fuel to an intake path.

In the present teaching and embodiments, the straddled vehicle may or may not include a forced induction device which is configured to pressurize air supplied to a combustion chamber of the engine. The forced induction device may be a turbocharger, a mechanical supercharger, or a motor-driven supercharger. The turbocharger may be an electrically assisted turbocharger configured to pressurize air by the pressure of exhaust gas and an electric motor, or a turbocharger configured to pressurize air solely by the pressure of exhaust gas.

In the present teaching and embodiments, the straddled vehicle may include a catalyst which is configured to purify exhaust gas and is provided in the exhaust path. The catalyst may be, for example, provided downstream of a part to which the EGR path is connected in the flow direction of the exhaust gas, in the exhaust path.

In this description, an expression "a member A is provided leftward of a member B when viewed in the left-right direction" indicates the following state. The entire member A is leftward of a plane passing through the leftmost end of the member B and orthogonal to the left-right direction. The rightmost end of the member A may or may not be on the plane passing through the leftmost end of the member B and orthogonal to the left-right direction. In this connection, the members A and B may or may not be lined up along a straight line parallel to the left-right direction. The above-described definition is suitably applied for an expression "a member A is rightward of a member B in the left-right direction", with appropriate replacement of the terms. Further, the above-described definition is suitably applied for an expression "a member A is above or below a member B in the up-down direction", with appropriate replacement of the terms. Further, the above-described definition is suitably applied for an expression "a member A is forward of or rearward of a member B in the front-rear direction", with appropriate replacement of the terms.

In the description, unless otherwise specified, an expression "a member A is to the left of a member B in the left-right direction" encompasses both a case where the member A is to the left of only a part of the member B in the left-right direction and a case where the member A is to the left of the entire member B in the left-right direction. An expression "a member A is to the left of a member B in the left-right direction" indicates the following state. The entire member A overlaps at least part of the member B when viewed in the left-right direction, and the right end of the entire member A and the left end of the at least part of the member B oppose each other in the left-right direction, The above-described definition is suitably applied for an expression "a member A is to the right of a member B in the left-right direction", with appropriate replacement of the terms. Further, the above-described definition is suitably applied for an expression "a member A is directly above or below a member B in the up-down direction", with appropriate replacement of the terms. Further, the above-described definition is suitably applied for an expression "a member A is in front of or behind a member B in the front-rear direction", with appropriate replacement of the terms.

In this specification, an expression "within 45 degrees" encompasses 45 degrees. In the specification, in a three-dimensional space, a direction along A indicates a direction within a conical range that is within 45 degrees relative to A.

In the present teaching and embodiments, at least one of plural options encompasses all conceivable combinations of the options. At least one of plural options may be one of the options, some of the options, or all of the options. For example, at least one of A, B, or C indicates only A, only B, only C, A and B, A and C, B and C, or A, B, and C.

In the present teaching and embodiments, A and/or B means A and B, or A or B.

In the present teaching and embodiments, terms "including", "comprising", "having", and derivatives thereof are used to encompass not only listed items and equivalents thereof but also additional items.

In the present teaching and embodiments, the terms "mounted", "connected", "coupled", and "supported" are used in broad sense. Specifically, not only direct attachment, connection, coupling, and support but also indirect attachment, connection, coupling, and support are included. Further, connected and coupled are not limited to physical or mechanical connections and couplings. They also include direct or indirect electrical connections and couplings.

Unless otherwise defined, all terms (technical and scientific terms) used in this specification and claims indicate meanings typically understood by a person with ordinary skill in the art in the technical field to which the present teaching belongs. Terms such as those defined in commonly used dictionaries are to be interpreted as having meaning that is consistent with their meaning in the context of the relevant art and the present disclosure, and are not to be interpreted in an idealized or excessively formal sense.

In this description, the term "may" is non-exclusive. "May be" means "may be but not limited to". In the present specification, "may" implicitly encompasses "do not".

Before the embodiments of the present teaching are detailed, it is informed that the present teaching is not limited to the configurations and layout of elements described below and/or shown in drawings. The present teaching is also applicable to embodiments other than the embodiments described later. The present teaching may be implemented as various modifications of the below-described embodiment. Furthermore, the present teaching may be implemented by suitably combining below-described embodiments and modifications.

### [Advantageous Effects]

The present teaching makes it possible to provide a straddled vehicle in which an EGR cooler is provided such that condensed water generated in the EGR cooler flows toward an exhaust path, in consideration of unique features of the straddled vehicle, which are a limited amount of vacant space due to the small size of the vehicle and a large amount of airflow impinging on an engine and members around the engine when the vehicle runs, and by an arrangement different from Patent Literature 1.

### [Brief Description of Drawings]

FIG. 1 is a schematic diagram showing examples of a straddled vehicle of the First Embodiment of the present teaching.
FIG. 2 is a schematic diagram showing examples of a straddled vehicle of the Second Embodiment of the present teaching.
FIG. 3 is a schematic diagram showing an example of a straddled vehicle of the Third Embodiment of the present teaching.
FIG. 4 is a schematic diagram showing examples of a straddled vehicle of the Fourth Embodiment of the present teaching.
FIG. 5 is a schematic diagram showing other examples of the straddled vehicle of the Fourth Embodiment of the present teaching.
FIG. 6 is a schematic diagram showing further examples of the straddled vehicle of the Fourth Embodiment of the present teaching.
FIG. 7 is a schematic diagram showing examples of a straddled vehicle of the Fifth Embodiment of the present teaching.
FIG. 8 is a schematic diagram showing examples of a straddled vehicle of the Sixth Embodiment of the present teaching.
FIG. 9 is a schematic diagram showing examples of a straddled vehicle of the Seventh Embodiment of the present teaching.
FIG. 10 is a schematic diagram showing examples of a straddled vehicle of the Eighth Embodiment of the present teaching.

### [Description of Embodiments]

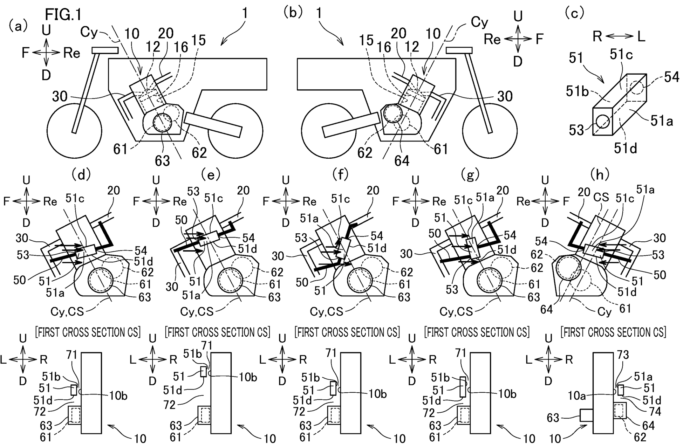

In FIG. 1 to FIG. 10, arrows F, Re, U, D, L, and R indicate a vehicle forward direction, a vehicle rearward direction, a vehicle upward direction, a vehicle downward direction, a vehicle leftward direction, and a vehicle rightward direction, respectively. In FIG. 1, FIG. 2, and FIG. 4 to FIG. 10, thick arrows indicate airflows.

### [First Embodiment]

The following will describe a straddled vehicle 1 of the First Embodiment of the present teaching with reference to FIG. 1. A straddled vehicle 1 of each of the Second to Eighth Embodiments described later has features of the straddled vehicle 1 of the First Embodiment. FIGs. 1(a) and 1(b) are schematic diagrams showing a state in which an EGR cooler 51 and an EGR path 50 which will be described later are removed from the straddled vehicle 1 of the First Embodiment. It is noted that the straddled vehicle 1 of the First Embodiment is not limited to examples shown in FIGs. 1(a) to 1(h).

The straddled vehicle 1 includes an engine 10. The engine 10 includes a generator 61 and/or a clutch 62. The engine 10 includes a protrusion 63 that covers at least part of the generator 61 and protrudes in the vehicle leftward direction or the vehicle rightward direction and/or a protrusion 64 that covers at least part of the clutch 62 and protrudes in the vehicle rightward direction. The engine 10 has at least one cylinder hole 15 whose central axial line Cy is parallel to or intersects with the vehicle up-down direction. Hereinafter, the central axis Cy of the cylinder hole 15 is referred to as a cylinder axial line Cy. The engine 10 includes at least one combustion chamber 12. The cylinder hole 15 and a piston head 16 form part of the combustion chamber 12. The at least one combustion chamber 12 is connected to an intake path 20 and an exhaust path 30.

The straddled vehicle 1 includes an EGR cooler 51. The EGR cooler 51 is provided at an intermediate part of an EGR path 50 which recirculates part of exhaust gas generated in the engine 10 from the exhaust path 30 to the intake path 20. FIGs. 1(d) to 1(h) show examples of the layout of the EGR cooler 51 and the EGR path 50 in the First Embodiment. The EGR cooler 51 has an exhaust-side port 53 through which exhaust gas flows in and an intake-side port 54 through which exhaust gas flows out. The EGR cooler 51 is arranged such that, in the vehicle up-down direction, the lower end of the exhaust-side port 53 is positioned below the intake-side port 54. The EGR cooler 51 is configured to cool the exhaust gas flowing in from the exhaust-side port 53 and to cause condensed water generated due to cooling of the exhaust gas to be discharged from the exhaust-side port 53 and flow toward the exhaust path 30.

The EGR cooler 51 is independent from the engine 10. The longest one of the lengths in the three directions orthogonal to one another of the EGR cooler 51 is the length in the vehicle front-rear direction or the length in a direction along the vehicle up-down direction. FIGs. 1(d), 1(e), and 1(h) show examples when the longest one of the lengths in the three directions orthogonal to one another of the EGR cooler 51 is the length in a direction along the vehicle front-rear direction. FIGs. 1(f) and 1(g) show examples when the longest one of the lengths in the three directions orthogonal to one another of the EGR cooler 51 is the length in a direction along the vehicle up-down direction. In the EGR cooler 51 shown in FIG. 1(g), the distance between the exhaust-side port 53 and the intake-side port 54 is short as compared to the EGR coolers 51 shown in FIGs. 1(d) to 1(f) and 1(h).

A left surface 51a and a right surface 51b of the EGR cooler 51 and/or a top surface 51c and a bottom surface 51d thereof are made of metal in order to allow heat of exhaust gas inside the EGR cooler 51 to partially transferred to the left surface 51a and the right surface 51b of the EGR cooler 51 and/or the top surface 51c and the bottom surface 51d of the EGR cooler 51. FIG. 1(c) is a perspective view of only the EGR cooler 51 shown in each of FIGs. 1(d) to 1(f) and 1(h).

On a first cross section CS that is parallel to the cylinder axial line Cy and parallel to the vehicle left-right direction, the EGR cooler 51 is disposed to satisfy below-described conditions (i) to (iii) such that an airflow generated by the running of the straddled vehicle 1 impinges on the left surface 51a and the right surface 51b and/or on the top surface 51c and the bottom surface 51d. Among two drawings in each of FIG. 1(d) to FIG. 1(h), the lower drawing indicates the first cross section CS. The drawing of the first cross section CS shows only members existing on the first cross section CS.
(i) On the first cross section CS, at least part of the EGR cooler 51 is provided to the left of part of the left surface 10b of the engine 10 or to the right of part of the right surface 10a of the engine 10 in the vehicle left-right direction.
(ii) On the first cross section CS, at least part of the EGR cooler 51 is provided directly above the protrusion 63 or the protrusion 64 covering at least part of the generator 61 or the clutch 62 of the engine 10 in a direction that is parallel to the cylinder axial line Cy and is identical with the vehicle upward direction.
(iii) On the first cross section CS, between the metal-made right surface 51b or left surface 51a of the EGR cooler 51 and part of the left surface 10b or the right surface 10a of the engine 10, a gap 71 or a gap 73 allowing an airflow to pass through is provided, and/or, between the metal-made bottom surface 51d of the EGR cooler 51 and the protrusion 63 or the protrusion 64 covering at least part of the generator 61 or the clutch 62 of the engine 10, a gap 72 or a gap 74 is provided to allow an airflow to pass through. The gap 71 is a gap between the right surface 51b of the EGR cooler 51 and part of the left surface 10b of the engine 10. The gap 73 is a gap between the left surface 51a of the EGR cooler 51 and part of the right surface 10a of the engine 10. The gap 72 is a gap between the bottom surface 51d of the EGR cooler 51 and the protrusion 63 covering at least part of the generator 61 of the engine 10. The gap 74 is a gap between the bottom surface 51d of the EGR cooler 51 and the protrusion 64 covering at least part of the clutch 62 of the engine 10.

FIG. 1(d) to FIG. 1(g) show examples in which the gap 71 and the gap 72 are formed on the first cross section CS to allow an airflow to pass through. FIG. 1(h) shows an example in which the gap 73 and the gap 74 are formed on the first cross section CS to allow an airflow to pass through.

### [Second Embodiment]

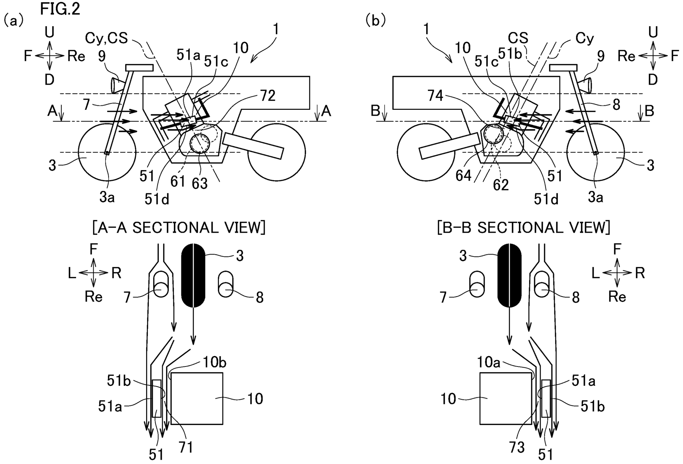

The following will describe a straddled vehicle 1 of the Second Embodiment of the present teaching with reference to FIG. 2. FIG. 2(a) and FIG. 2(b) show two examples of the Second Embodiment. It is noted that the straddled vehicle 1 of the Second Embodiment is not limited to examples shown in FIG. 2. It is noted that an A-A sectional view that is the lower one of the two drawings in FIG. 2(a) shows objects that are visible in the direction of an arrow A, in addition to objects on the cross section. The same applies to a B-B sectional view in FIG. 2(b).

The straddled vehicle 1 has two front fork units 7 and 8. The front fork unit 7 is provided at the left portion of the straddled vehicle 1 to extend along the vehicle up-down direction. The front fork unit 8 is provided at the right portion of the straddled vehicle 1 to extend along the vehicle up-down direction. The two front fork units 7 and 8 support at least one front wheel 3 to be rotatable. The EGR cooler 51 is provided such that, when the straddled vehicle 1 is running, at least one of an airflow having passed through the inside of the two front fork units 7 and 8 or an airflow having passed through the outside of the two front fork units 7 and 8 impinges on the metal-made left surface 51a and right surface 51b of the EGR cooler 51 and/or the metal-made top surface 51c and bottom surface 51d.

The straddled vehicle 1 of the Second Embodiment may include a headlight unit 9 composed of at least one headlight. In this case, the EGR cooler 51 may be provided such that, when the straddled vehicle 1 is running, in a space that is above the rotation center 3a of the at least one front wheel 3 and below the lower end of the headlight unit 9 in the vehicle up-down direction, at least one of an airflow having passed through the inside of the two front fork units 7 and 8 or an airflow having passed through the outside of the two front fork units 7 and 8 impinges on the metal-made left surface 51a and right surface 51b of the EGR cooler 51 and/or the metal-made top surface 51c and bottom surface 51d. To be more specific, the EGR cooler 51 may be provided above the rotation center 3a of the at least one front wheel 3 and below the lower end of the headlight unit 9 in the vehicle up-down direction.

### [Third Embodiment]

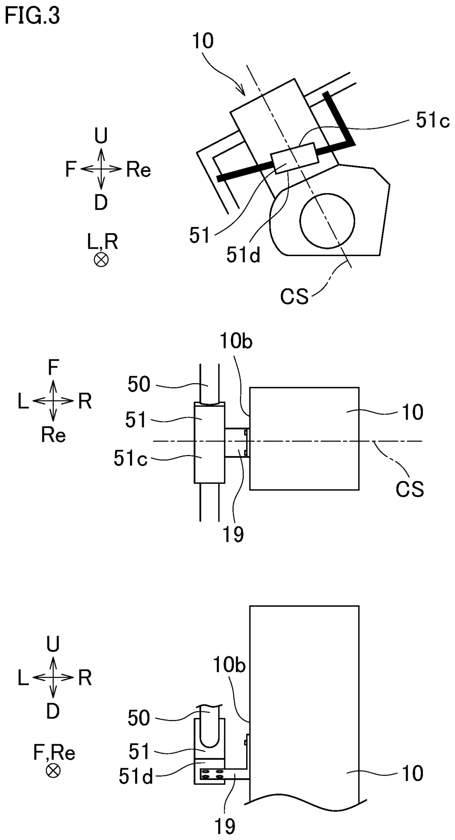

The following will describe a straddled vehicle 1 of the Third Embodiment of the present teaching with reference to FIG. 3. The straddled vehicle 1 of the Third Embodiment may have the same features as those of the straddled vehicle 1 of the Second Embodiment. FIG. 3 shows an example of the Third Embodiment. It is noted that the straddled vehicle 1 of the Third Embodiment is not limited to the example shown in FIG. 3.

The EGR cooler 51 is supported by the engine 10. FIG. 3 shows an example in which the EGR cooler 51 is indirectly connected to the engine 10 via the bracket 19. However, the shape of the bracket 19, the position of the junction between the bracket 19 and the EGR cooler 51, and the position of the junction between the bracket 19 and the engine 10 are not limited to those shown in FIG. 3. The EGR cooler 51 of the Third Embodiment may be directly connected to the engine 10 by a fastening member.

### [Fourth Embodiment]

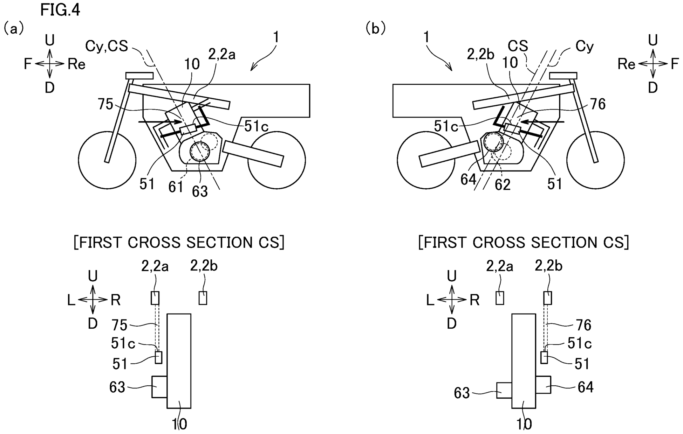

The following will describe a straddled vehicle 1 of the Fourth Embodiment of the present teaching with reference to FIG. 4 to FIG. 6. The straddled vehicle 1 of the Fourth Embodiment may have the same features as those of the straddled vehicle 1 of at least one of the Second Embodiment and Third Embodiment. FIG. 4 to FIG. 6 show plural examples of the Fourth Embodiment. It is noted that the straddled vehicle 1 of the Fourth Embodiment is not limited to the examples shown in FIG. 4 to FIG. 6.

The top surface 51c of the EGR cooler 51 is made of metal. On a first cross section CS, the EGR cooler 51 is disposed to satisfy below-described conditions (I) and (II) such that an airflow generated by the running of the straddled vehicle 1 impinges on the top surface 51c made of metal.
(I) On the first cross section CS, in a direction that is parallel to a cylinder axial line Cy and is identical with the vehicle downward direction, at least part of the EGR cooler 51 is provided directly below at least one of: a frame portion 2; a cover portion 4; a tank member 5 formed of only a tank 5a or a combination of the tank 5a and a tank shroud 5b; or a dummy tank member 6 formed of only a dummy tank 6a or a combination of the dummy tank 6a and a dummy tank shroud 6b.
(II) On the first cross section CS, between the metal-made top 51c of the EGR cooler 51 and at least one of the frame portion 2, the cover portion 4, the tank member 5, or the dummy tank member 6, a gap 75 or a gap 76 is provided to allow an airflow to pass through. The gap 75 is a gap on the first cross section CS between the metal-made top surface 51c of the EGR cooler 51 and at least one of the frame portion 2, the cover portion 4, the tank member 5, or the dummy tank member 6, when at least part of the EGR cooler 51 is provided to the left of part of the left surface 10b of the engine 10 on the first cross section CS. The gap 76 is a gap on the first cross section CS between the metal-made top surface 51c of the EGR cooler 51 and at least one of the frame portion 2, the cover portion 4, the tank member 5, or the dummy tank member 6, when at least part of the EGR cooler 51 is provided to the right of part of the right surface 10a of the engine 10 on the first cross section CS.

As described above, in the Fourth Embodiment, an airflow impinges on the metal-made top surface 51c of the EGR cooler 51. To put it differently, in the Fourth Embodiment, an airflow impinges on the metal-made left surface 51a, right surface 51b, top surface 51c, and bottom surface 51d of the EGR cooler 51, an airflow impinges on the meta-made left surface 51a, right surface 51b, and top surface 51c of the EGR cooler 51, or an airflow impinges on the metal-made top surface 51c and bottom surface 51d of the EGR cooler 51.

FIG. 4(a) shows an example in which, on the first cross section CS, part of the EGR cooler 51 is provided directly below a left frame portion 2a that is a frame portion 2 provided at a left portion of the straddled vehicle 1. In FIG. 4(a), the gap 75 is provided between the top surface 51c of the EGR cooler 51 and the left frame portion 2a on the first cross section CS.

FIG. 4(b) shows an example in which, on the first cross section CS, part of the EGR cooler 51 is provided directly below a right frame portion 2b that is a frame portion 2 provided at a right portion of the straddled vehicle 1. In FIG. 4(b), the gap 76 is provided between the top surface 51c of the EGR cooler 51 and the right frame portion 2b on the first cross section CS.

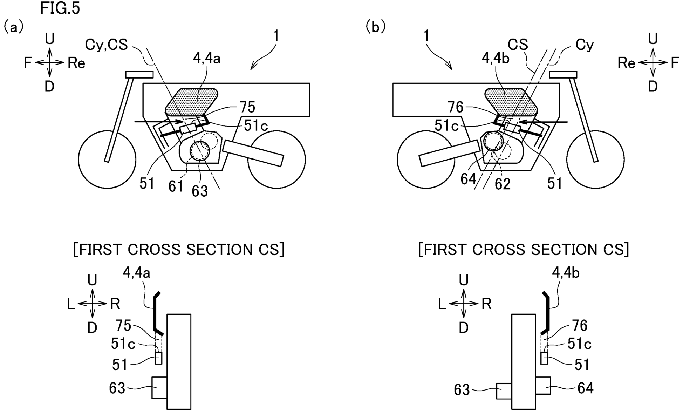

FIG. 5(a) shows an example in which, on the first cross section CS, part of the EGR cooler 51 is provided directly below a left cover portion 4a that is a cover portion 4 provided at a left portion of the straddled vehicle 1. In FIG. 5(a), the gap 75 is provided between the top surface 51c of the EGR cooler 51 and the left cover portion 4a on the first cross section CS.

FIG. 5(b) shows an example in which, on the first cross section CS, part of the EGR cooler 51 is provided directly below a right cover portion 4b that is a cover portion 4 provided at a right portion of the straddled vehicle 1. In FIG. 5(b), the gap 76 is provided between the top surface 51c of the EGR cooler 51 and the right cover portion 4b on the first cross section CS.

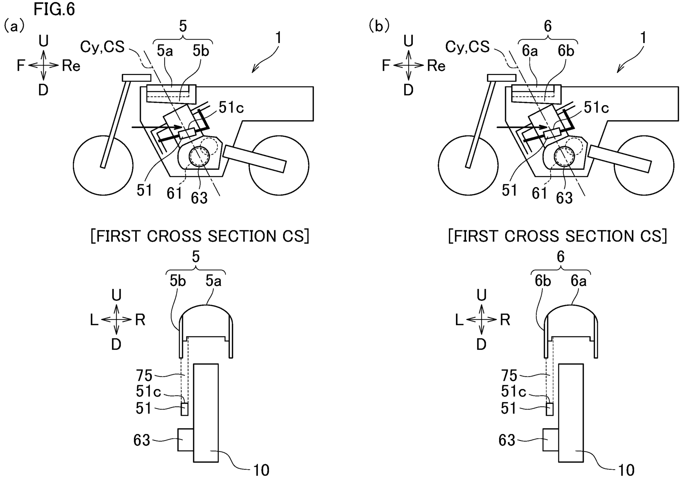

FIG. 6(a) shows an example in which, on the first cross section CS, part of the EGR cooler 51 is provided directly below the tank member 5 that is formed of a combination of the tank 5a and the tank shroud 5b. In FIG. 6(a), the gap 75 is provided between the top surface 51c of the EGR cooler 51 and the tank member 5 on the first cross section CS.

FIG. 6(b) shows an example in which, on the first cross section CS, part of the EGR cooler 51 is provided directly below the dummy tank member 6 that is formed of a combination of the dummy tank 6a and the dummy tank shroud 6b. In FIG. 6(a), the gap 75 is provided between the top surface 51c of the EGR cooler 51 and the dummy tank member 6 on the first cross section CS.

### [Fifth Embodiment]

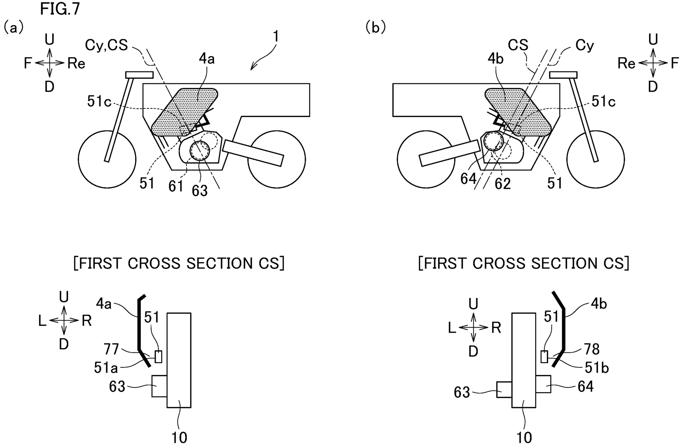

The following will describe a straddled vehicle 1 of the Fifth Embodiment of the present teaching with reference to FIG. 7. The straddled vehicle 1 of the Fifth Embodiment may have the same features as those of the straddled vehicle 1 of at least one of the Second Embodiment to Fourth Embodiment. FIG. 7(a) and FIG. 7(b) show two examples of the Fifth Embodiment. It is noted that the straddled vehicle 1 of the Fifth Embodiment is not limited to the example shown in FIG. 7.

The left surface 51a and the right surface 51b of the EGR cooler 51 are made of metal. At least part of the left surface 51a or the right surface 51b of the EGR cooler 51 is covered with either a left cover portion 4a provided at a left portion of the straddled vehicle 1 or a right cover portion 4b provided at a right portion of the straddled vehicle 1. On the first cross section CS, between the left surface 51a or the right surface 51b of the EGR cooler 51 and the left cover portion 4a or the right cover portion 4b, a gap 77 or a gap 78 allowing an airflow to pass through is provided to allow an airflow generated by the running of the straddled vehicle 1 to impinge on the metal-made left 51a or right surface 51b of the EGR cooler 51. The gap 77 is a gap between the left surface 51a of the EGR cooler 51 and the left cover portion 4a, whereas the gap 78 is a gap between the right surface 51b of the EGR cooler 51 and the right cover portion 4b.

As described above, in the Fifth Embodiment, an airflow impinges on the metal-made left surface 51a or right surface 51b of the EGR cooler 51. To put it differently, in the Fifth Embodiment, an airflow impinges on the metal-made left surface 51a, right surface 51b, top surface 51c, and bottom surface 51d of the EGR cooler 51, an airflow impinges on the meta-made left surface 51a or right surface 51b of the EGR cooler 51, or an airflow impinges on the metal-made left surface 51a or right surface 51b of the EGR cooler 51 or the metal-made top surface 51c and bottom surface 51d of the EGR cooler 51.

### [Sixth Embodiment]

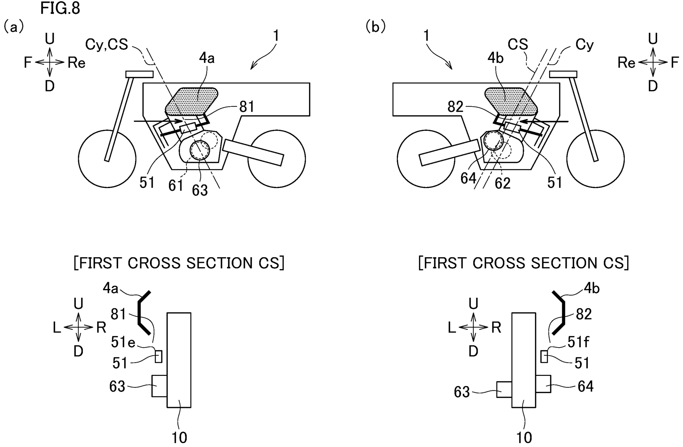

A straddled vehicle 1 of the Sixth Embodiment of the present teaching will be described. The straddled vehicle 1 of the Sixth Embodiment may have the same features as those of the straddled vehicle 1 of at least one of the Second Embodiment to Fifth Embodiment. FIG. 8(a) and FIG. 8(b) show two examples of the Sixth Embodiment. It is noted that the straddled vehicle 1 of the Sixth embodiment is not limited to the example shown in FIG. 8.

On a first cross section CS, the EGR cooler 51 is disposed to satisfy below-described conditions (A) and (B) such that an airflow generated by the running of the straddled vehicle 1 impinges on the metal-made left surface 51a and right surface 51b and/or on the metal-made top surface 51c and bottom surface 51d of the EGR cooler 51.
(A) On the first cross section CS, the EGR cooler 51 is positioned either below the left cover portion 4a at the left portion of the straddled vehicle 1 in a direction parallel to the cylinder axial line Cy and identical with the vehicle downward direction and rightward of the left cover portion 4a in the vehicle left-right direction, or below a right cover portion 4b at the right portion of the straddled vehicle 1 in the direction parallel to the cylinder axial line Cy and identical with the vehicle downward direction and leftward of the right cover portion 4b in the vehicle left-right direction.
(B) On the first cross section CS, between an upper left end portion 51e or an upper right end portion 51f of the EGR cooler 51 and the left cover portion 4a or the right cover portion 4b, a gap 81 or a gap 82 is provided to allow an airflow to pass through. The gap 81 is a gap between the upper left end portion 51e of the EGR cooler 51 and the left cover portion 4a, whereas the gap 82 is a gap between the upper right end portion 51f of the EGR cooler 51 and the right cover portion 4b.

### [Seventh Embodiment]

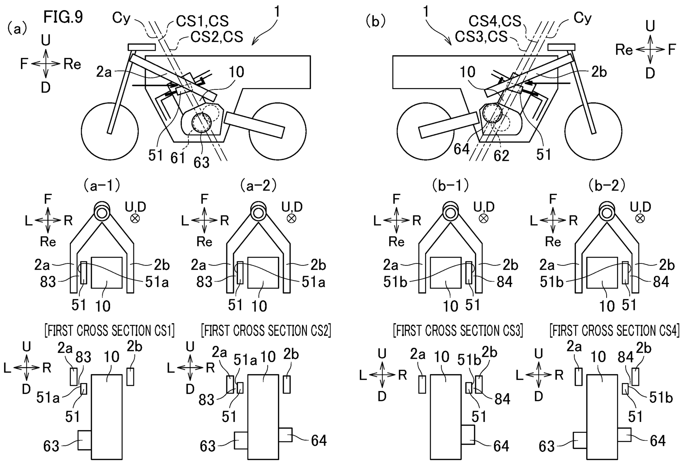

The following will describe a straddled vehicle 1 of the Seventh Embodiment of the present teaching with reference to FIG. 9. FIG. 9 shows an example of the Seventh Embodiment. The straddled vehicle 1 of the Seventh Embodiment may have the same features as those of the straddled vehicle 1 of at least one of the Second Embodiment to Sixth embodiment. FIG. 9 shows four examples of the Seventh Embodiment. FIG. 9(a) includes a side view of a straddled vehicle 1 in FIG. 9(a-1) and a side view of a straddled vehicle 1 in FIG. 9(a-2). FIG. 9(b) includes a side view of a straddled vehicle 1 in FIG. 9(b-1) and a side view of a straddled vehicle 1 in FIG. 9(b-2). A first cross section CS1 to a first cross section CS4 in FIG. 9 are examples of a first cross section CS. It is noted that the straddled vehicle 1 of the Seventh Embodiment is not limited to the examples shown in FIG. 9.

The left surface 51a and the right surface 51b of the EGR cooler 51 are made of metal. On a first cross section CS, the EGR cooler 51 is disposed to satisfy below-described conditions (a) and (b) such that an airflow generated by the running of the straddled vehicle 1 impinges on the metal-made left surface 51a or right surface 51b.
(a) On a first cross section CS, at least part of the EGR cooler 51 is provided either to the right of a left frame portion 2a at a left portion of the straddled vehicle 1 or to the left of a right frame portion 2b at a right portion of the straddled vehicle 1 in the vehicle left-right direction.
(b) On the first cross section CS, a gap 83 or a gap 84 allowing an airflow to pass through is provided either between the metal-made left surface 51a of the EGR cooler 51 and the left frame portion 2a or between the metal-made right surface 51b of the EGR cooler 51 and the right frame portion 2b. The gap 83 is a gap between the left surface 51a of the EGR cooler 51 and the left frame portion 2a, whereas the gap 84 is a gap between the right surface 51b of the EGR cooler 51 and the right frame portion 2b.

As described above, in the Seventh Embodiment, an airflow impinges on the metal-made left surface 51a or right surface 51b of the EGR cooler 51. To put it differently, in the Seventh Embodiment, an airflow impinges on the metal-made left surface 51a, right surface 51b, top surface 51c, and bottom surface 51d of the EGR cooler 5151, an airflow impinges on the meta-made left surface 51a or right surface 51b of the EGR cooler 51, or an airflow impinges on the metal-made left surface 51a or right surface 51b of the EGR cooler 51 or the metal-made top surface 51c and bottom surface 51d of the EGR cooler 51.

### [Eighth Embodiment]

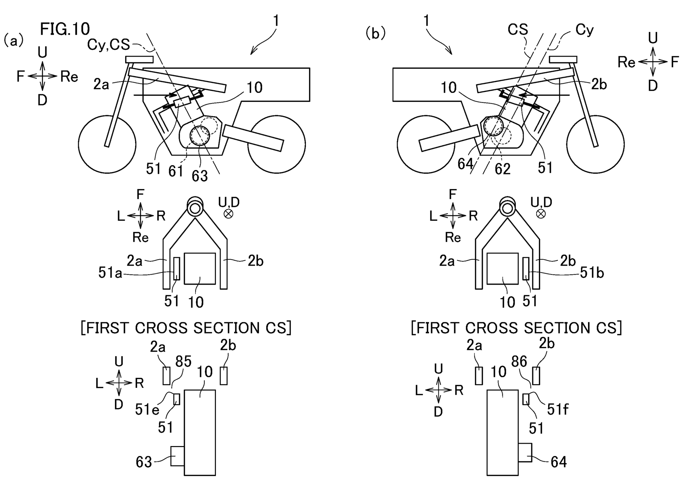

The following will describe a straddled vehicle 1 of the Eighth Embodiment of the present teaching with reference to FIG. 10. The straddled vehicle 1 of the Eighth Embodiment may have the same features as those of the straddled vehicle 1 of at least one of the Second Embodiment to Seventh Embodiment. FIG. 10 shows plural examples of the Eighth Embodiment. It is noted that the straddled vehicle 1 of the Eighth Embodiment is not limited to the example shown in FIG. 10.

On a first cross section CS, the EGR cooler 51 is disposed to satisfy below-described conditions (a) and (b) such that an airflow generated by the running of the straddled vehicle 1 impinges on the metal-made left surface 51a and right surface 51b and/or on the metal-made top surface 51c and the bottom surface 51d of the EGR cooler 51.
(a) On a first cross section CS, the EGR cooler 51 is provided directly below a space between a left frame portion 2a at a left portion of the straddled vehicle 1 and a right frame portion 2b at a right portion of the straddled vehicle 1, in a direction parallel to a cylinder axial line Cy and identical with the vehicle downward direction.
(b) On the first cross section CS, between an upper left end portion 51e or an upper right end portion 51f of the EGR cooler 51 and the left frame portion 2a or the right frame portion 2b, a gap 85 or a gap 86 is provided to allow an airflow to pass through. The gap 85 is a gap between the upper left end portion 51e of the EGR cooler 51 and the left frame portion 2a, whereas the gap 86 is a gap between the upper right end portion 51f of the EGR cooler 51 and the right frame portion 2b.

### [Reference Signs List]

1: straddled vehicle, 2: frame portion, 2a: left frame portion, 2b: right frame portion, 3: front wheel, 3a: rotation center of front wheel, 4: cover portion, 4a: left cover portion, 4b: right cover portion, 5a: tank, 5b: tank shroud, 5: tank member, 6a: dummy tank, 6b: dummy tank shroud, 6: dummy tank member, 7, 8: front fork unit, 9: headlight unit, 10: engine, 10a: right surface of engine, 10b: left surface of engine, 15: cylinder hole, 20: intake path, 30: exhaust path, 50: EGR path, 51: EGR cooler, 51a: left surface of EGR cooler, 51b: right surface of EGR cooler, 51c: top surface of EGR cooler, 51d: bottom surface of EGR cooler, 51e: upper left end portion of EGR cooler, 51f: upper right end portion of EGR cooler, 53: exhaust-side port, 54: intake-side port, 61: generator, 62: clutch, 63, 64: protrusion, 71, 72, 73, 74, 75, 76, 77, 78, 81, 82, 83, 84, 85, 86: gap, Cy: cylinder axial line (central axial line of cylinder hole), CS: first cross section

## Claims

1. A straddled vehicle comprising:
an engine which includes a generator and/or a clutch and on which a protrusion that covers at least a part of the generator or the clutch and protrudes in a vehicle leftward direction or a vehicle rightward direction is formed; and
an EGR cooler which is provided on an intermediate part of an EGR path in which part of exhaust gas generated in the engine recirculates from an exhaust path to an intake path, which has an exhaust-side port through which the exhaust gas flows in and an intake-side port through which the exhaust gas flows out, which is arranged such that the lower end of the exhaust-side port is positioned below the intake-side port in a vehicle up-down direction, which is configured to cool the exhaust gas, and which is provided to allow condensed water generated due to cooling of the exhaust gas to be discharged from the exhaust-side port and flow toward the exhaust path,
the EGR cooler being independent from the engine and the longest one of lengths in three directions orthogonal to one another of the EGR cooler being the length in a vehicle front-rear direction or the length in a direction along the vehicle up-down direction,
a left surface and a right surface of the EGR cooler and/or a top surface and a bottom surface of the EGR cooler being made of a metal in order to allow heat of the exhaust gas inside the EGR cooler to partially transferred to the left surface and the right surface of the EGR cooler and/or the top surface and the bottom surface of the EGR cooler, and
on a first cross section that is parallel to a central axial line of at least one cylinder hole of the engine, is either parallel to or oblique to the vehicle up-down direction, and is parallel to a vehicle left-right direction, in order to allow an airflow generated by running of the straddled vehicle to impinge on the left surface and the right surface of the EGR cooler made of the metal and/or the top surface and the bottom surface of the EGR cooler made of the metal,
(i) at least part of the EGR cooler being provided to the left of part of a left surface of the engine or to the right of part of a right surface of the engine in the vehicle left-right direction,
(ii) at least part of the EGR cooler being provided directly above the protrusion covering at least part of the generator or the clutch of the engine in a direction that is parallel to the central axial line of the at least one cylinder hole and is identical with a vehicle upward direction, and
(iii) between the right surface or the left surface of the EGR cooler made of the metal and part of the left surface or the right surface of the engine and/or between the bottom surface of the EGR cooler made of the metal and the protrusion covering at least part of the generator or the clutch of the engine, a gap being provided to allow the airflow to pass through.

2. The straddled vehicle according to claim 1, further comprising
two front fork units which are provided at a left portion and a right portion of the straddled vehicle, respectively, to extend along the vehicle up-down direction, and support at least one front wheel to be rotatable,
the EGR cooler being provided such that, when the straddled vehicle is running, at least one of an airflow having passed through inside the two front fork units or an airflow having passed through outside the two front fork units impinges on the left surface and the right surface of the EGR cooler made of the metal and/or the top surface and the bottom surface of the EGR cooler made of the metal.

3. The straddled vehicle according to claim 2, further comprising
a headlight unit which is composed of at least one headlight,
the EGR cooler being arranged such that, when the straddled vehicle is running, in a space which is above the rotation center of the at least one front wheel and below the lower end of the headlight unit in the vehicle up-down direction, at least one of the airflow having passed through the inside the two front fork units or the airflow having passed through the outside the two front fork units impinges on the left surface and the right surface of the EGR cooler made of the metal and/or the top surface and the bottom surface of the EGR cooler made of the metal.

4. The straddled vehicle according to claim 3, wherein, the EGR cooler is provided above the rotation center of the at least one front wheel and below the lower end of the headlight unit in the vehicle up-down direction so that, when the straddled vehicle is running, in the space which is above the rotation center of the at least one front wheel and below the lower end of the headlight unit in the vehicle up-down direction, at least one of the airflow having passed through the inside the two front fork units or the airflow having passed through the outside the two front fork units impinges on the left surface and the right surface of the EGR cooler made of the metal and/or the top surface and the bottom surface of the EGR cooler made of the metal.

5. The straddled vehicle according to any one of claims 1 to 4, wherein, the EGR cooler is supported by the engine.

6. The straddled vehicle according to any one of claims 1 to 5, wherein,
the top surface of the EGR cooler is made of the metal, and
on the first cross section, in order to allow an airflow generated by the running of the straddled vehicle to impinge on the top surface of the EGR cooler made of the metal,
(I) in a direction that is parallel to the central axial line of the at least one cylinder hole and is identical with the vehicle downward direction, at least part of the EGR cooler is provided directly below at least one of: a frame portion; a cover portion; a tank member formed of only a tank or a combination of the tank and a tank shroud; or a dummy tank member formed of only a dummy tank or a combination of the dummy tank and a dummy tank shroud, and
(II) between the top surface of the EGR cooler made of the metal and at least one of the frame portion, the cover portion, the tank member, or the dummy tank member, a gap is provided to allow the airflow to pass through.

7. The straddled vehicle according to any one of claims 1 to 6, wherein,
the left surface and the right surface of the EGR cooler are made of the metal,
at least part of the left surface or the right surface of the EGR cooler is covered with a cover portion, and
on the first cross section, in order to allow an airflow generated by the running of the straddled vehicle to impinge on the left surface or the right surface of the EGR cooler made of the metal,
between the left surface or the right surface of the EGR cooler made of the metal and the cover portion, a gap is provided to allow the airflow to pass through.

8. The straddled vehicle according to any one of claims 1 to 6, wherein,
on the first cross section, in order to allow an airflow generated by the running of the straddled vehicle to impinge on the left surface and the right surface of the EGR cooler made of the metal and/or the top surface and the bottom surface of the EGR cooler made of metal,
(A) the EGR cooler is positioned either below the left cover portion at the left portion of the straddled vehicle in a direction parallel to the central axial line of the at least one cylinder hole and identical with the vehicle downward direction and rightward of the left cover portion in the vehicle left-right direction, or below a right cover portion at the right portion of the straddled vehicle in the direction parallel to the central axial line of the at least one cylinder hole and identical with the vehicle downward direction and leftward of the right cover portion in the vehicle left-right direction, and
(B) between an upper left end portion or an upper right end portion of the EGR cooler and the left cover portion or the right cover portion, a gap is provided to allow the airflow to pass through.

9. The straddled vehicle according to any one of claims 1 to 8, wherein,
the left surface and the right surface of the EGR cooler is made of the metal, and
on the first cross section, in order to allow an airflow generated by the running of the straddled vehicle to impinge on the left surface or the right surface of the EGR cooler made of the metal,
(a) at least part of the EGR cooler is provided either to the right of a left frame portion at the left portion of the straddled vehicle or to the left of a right frame portion at the right portion of the straddled vehicle in the vehicle left-right direction, and
(b) a gap allowing the airflow to pass through is provided either between the left surface of the EGR cooler made of the metal and the left frame portion or between the right surface of the EGR cooler made of the metal and the right frame portion.

10. The straddled vehicle according any one of claims 1 to 8, wherein,
on the first cross section, in order to allow an airflow generated by the running of the straddled vehicle to impinge on the left surface and the right surface of the EGR cooler made of the metal and/or the top surface and the bottom surface of the EGR cooler made of metal,
(a) the EGR cooler is provided directly below a space between two frame portions at the left portion and the right portion of the straddled vehicle, respectively, in a direction parallel to the central axial line of the at least one cylinder hole and identical with the vehicle downward direction, and
(b) a gap allowing the airflow to pass through is provided between an upper left end portion or an upper right end portion of the EGR cooler and one of the two frame portions.
